# FASCICULE DE BREVET EUROPEEN

(11) **EP 1 972 601 B1**
(45) Date de publication et mention de la délivrance du brevet: **20.07.2011**
(21) Numéro de dépôt: 08102855.7
(22) Date de dépôt: 21.03.2008
(51) Int. Cl.: C01G 49/02, C04B 14/30, C08F 220/28, C09C 1/22, C09C 3/10

(54) **Suspension pigmentaire présentant une force de teinte améliorée**
Pigmentsuspension mit verbesserter Färbekraft
Pigmentary suspension having improved dyeing capacity

(30) Priorité: 21.03.2007 FR 0753955
(43) Date de publication de la demande: 24.09.2008
(73) Titulaire: Chryso, 92440 Issy-Les-Moulineaux (FR)
(72) Inventeur: Eychenne-baron, Christophe, 92340 Bourg-la -Reine (FR); Malbault, Olivier, 77210 Avon (FR); Hivert, Jean-Jacques, 45300 Mareau aux Bois (FR)
(74) Mandataire: Domenego, Bertrand

(56) Documents cités:
- EP-A- 0 567 214
- US-A1- 2007 022 914
- US-B1- 6 596 816

## Description

La présente invention concerne l'utilisation de dispersants de type polycarboxylate de polyoxyde d'alkylène (PCP) pour améliorer la force de teinte de suspensions pigmentaires, et les suspensions pigmentaires ainsi obtenues.

Une suspension pigmentaire comprend généralement un solvant, le plus souvent de l'eau, des pigments et éventuellement un agent fluidifiant pour réduire la viscosité et/ou en augmenter la concentration pigmentaire. La force de teinte est une propriété essentielle de compositions pigmentaires. Elle définit la quantité de composition pigmentaire nécessaire pour l'obtention d'une nuance de teinte recherchée.

Pour la plupart des applications, on préfère disposer d'une suspension pigmentaire présentant une force de teinte élevée. Non seulement cela représente un facteur d'économie, mais on limite alors l'apport de matière à la composition à teindre. Ce dernier facteur est particulièrement important pour les matériaux à prise hydrauliques, dont la formulation optimisée peut être très sensible à la présence d'ions.

La demande de brevet US 2007/0022914 propose d'ajouter des polyvinylalcools partiellement ou entièrement hydrolysés ou des composés soufrés ou phosphorés dans des suspensions pigmentaires afin d'en améliorer la force de teinte.

Ces composés ne donnent cependant pas satisfaction.

La demande de brevet EP 0 567 214 décrit l'utilisation d'un copolymère obtenu par polymérisation d'acide méthacrylique, de méthacrylates et de styrène à titre de dispersant de pigments.

Ces composés peuvent toutefois poser des problèmes en raison de leur teneur résiduelle en monomère. Par ailleurs, le caractère hydrophobe limite leur absorption à la surface des particules de pigments polaires et de ce fait leur capacité de dispersion.

Le document US 6,596,816 propose des dispersants pour pigments à base d'acrylates d'alkyle dans lesquels au moins une partie des groupes ester est transformée en amides par aminolyse.

Le document US 2007/0022914 décrit une combinaison pigment / adjuvant ayant une force de teinte améliorée. Les adjuvants organiques mentionnés sont les polyvinylalcools complètement ou partiellement hydrolysés, alkylsulfates, alkylsulfonates, alkylphosphates et alkylphosphonates sous forme de leurs sels alcalins ou leurs mélanges.

Le but de la présente invention était donc de proposer une suspension pigmentaire ayant une force de teinte améliorée.

Ce but est atteint par l'ajout d'un polymère de type polycarboxylate de polyoxyde d'alkylène (PCP) à la suspension pigmentaire.

Aussi, selon un premier aspect, l'invention vise une suspension aqueuse pigmentaire comportant au moins un copolymère en peigne à chaîne principale polycarboxylate portant des chaînes latérales greffées de polyoxyde d'alkylène.

Sans vouloir être lié par une théorie quelconque, il est supposé que cet effet inattendu repose notamment sur une action dispersante au polycarboxylate de polyoxyde d'alkylène, grâce à laquelle on peut prévenir l'agglomération des particules de pigments. On obtient alors une suspension pigmentaire comportant des particules pigmentaires de taille centrées sur une granulométrie qui permet de maximiser la force de teinte.

Les suspensions pigmentaires sont généralement des dispersions aqueuses. Cependant, la suspension peut également le cas échéant contenir en quantité moindre un ou plusieurs autres solvants miscibles avec l'eau.

Sous le terme « pigment », on entend désigner des composés colorants non solubles dans le solvant choisi. Il s'agit généralement principalement de composés minéraux, et notamment d'oxydes et/ou hydroxydes de métal. On peut citer en particulier les oxydes de fer, les oxydes de chrome, les oxydes de titane, le bleu de cobalt, les oxydes mixtes de métal et le noir de carbone. Les pigments particulièrement préférés sont les d'oxydes de fer.

Parmi ces pigments sont tout particulièrement préférés ceux utilisés pour colorer les matériaux de construction tels que le ciment, mortier, béton et plâtre. De tels pigments sont commercialisés par exemple par la société Lanxess sous la dénomination Bayferrox 420, Bayferrox 110 et Bayferrox 330, correspondant respectivement aux colorations jaune, rouge et noir.

Bien entendu, la suspension peut contenir un ou plusieurs pigments différents.

Généralement, la suspension pigmentaire présente une teneur de 30 à 90, de préférence de 40 à 70 et tout particulièrement de 50 à 60 % en poids de pigment par rapport à la suspension totale.

Selon l'invention, la suspension pigmentaire contient en outre un ou des polymères polycarboxylate de polyoxyde d'alkylène. Sous le terme « polycarboxylate de polyoxyde d'alkylène », on entend désigner des copolymères en peigne à chaîne principale polycarboxylate portant des chaînes latérales greffées de polyoxyde d'alkylène. Ces polymères sont souvent appelés par l'abréviation PCP. Ils sont connus comme dispersants dits superplastifiants et sont disponibles dans le commerce, notamment auprès de la société CHRYSO (par exemples CHRYSO®Fluid Optima 200, CHRYSO®Fluid Optima 206)

Les polycarboxylates de polyoxyde d'alkylène (PCP) peuvent être notamment préparés par estérification entre un polyacide (méth)acrylique et un alkoxypolyalkylène glycol. La demande FR 2 776 285 décrit la préparation de polycarboxylates de polyoxyde d'alkylène par estérification partielle d'un acide polycarboxylique avec un polyéther.

De préférence, le polycarboxylate de polyoxyde d'alkylène est dérivé d'acide polyméthacrylique.

Il est par ailleurs préféré que le polycarboxylate de polyoxyde d'alkylène comporte des unités dérivées de méthoxypolyéthylène glycol.

Il est enfin particulièrement préféré que le polycarboxylate de polyoxyde d'alkylène comporte des unités dérivés de méthoxypolyéthylène glycol d'une masse molaire de 350 à 5000 D, et tout particulièrement 1000 à 3000 D.

On constate qu'une quantité très faible en polycarboxylate de polyoxyde d'alkylène, de l'ordre de 0,05 % en poids par rapport au poids de pigment, peut déjà être suffisante pour améliorer notablement la force de teinte.

Au-delà d'un dosage de 25 % en poids, on ne constate généralement cependant plus de changements notables.

Aussi, les suspensions pigmentaires selon l'invention contiennent de préférence 0,05 à 25, de préférence 0,15 à 15, et tout particulièrement 0,2 à 0,7% en poids de polycarboxylate de polyoxyde d'alkylène par rapport au poids des pigments.

De préférence, la suspension pigmentaire contient en outre 0,01 à 10 %, de préférence 0,01 à 5, et tout particulièrement 0,05 à 1 % en poids d'au moins un agent de stabilisation, par rapport au poids de pigment.

Avantageusement la suspension pigmentaire comprend en outre 0,01 à 10 % en poids d'au moins un agent anti-mousse.

Parmi les agents de stabilisation connus, on peut mentionner en particulier les polysaccharides, les gommes, et notamment le xanthane.

Selon un autre aspect, l'invention vise l'utilisation d'un polycarboxylate de polyoxyde d'alkylène qui est un copolymère en peigne à chaîne principale polycarboxylate portant des chaînes latérales greffées de polyoxyde d'alkylène pour améliorer la force de teinte d'une suspension pigmentaire.

Afin d'en faciliter le dosage, le polycarboxylate de polyoxyde d'alkylène utilisé pour améliorer la force de teinte de la suspension pigmentaire peut être formulé sous forme liquide, notamment sous forme de solution aqueuse.

Généralement, la formulation présente alors une teneur de 10 à 60 %, de préférence de 20 à 40 %, et tout particulièrement de 25 à 35 % d'extrait sec de polycarboxylate de polyoxyde d'alkylène.

Avantageusement, la formulation contient par ailleurs d'autres agents, notamment un ou plusieurs agents anti-mousse.

De préférence, le pH de la formulation est réglé avec un agent approprié à un pH neutre. De tels agents neutralisants peuvent être choisis notamment parmi l'hydroxyde de sodium, l'aminométhylpropanol et la triéthanolamine.

Les suspensions pigmentaires formulées avec un polycarboxylate de polyoxyde d'alkylène peuvent être notamment destinées à la coloration de matériaux à prise hydraulique, et en particulier le ciment et le plâtre.

Dans ce cadre, la suspension pigmentaire peut être utilisée de manière habituelle. Elle peut notamment être ajoutée avant, après ou conjointement à l'eau de gâchage.

L'invention sera décrite ci-après de manière plus détaillée au moyen des exemples. Sauf mention contraire, les pourcentages indiqués s'entendent en poids par rapport à la composition totale.

### EXEMPLES

### A. Synthèse du polymère (produit A)

Dans un récipient approprié muni d'un chauffage et d'une agitation mécanique, on introduit 42,82 g d'acide polyméthacrylique (Mw= 4000) et on règle la consigne de la chauffe à 60 °C. On introduit ensuite 0.40 g d'hydroxyde de sodium (NaOH à 50 %) et on s'assure de l'homogénéité du mélange réactionnel.

Ensuite, on introduit 56,78 g de méthoxypolyéthylèneglycol (Polyglycol M 2000), toujours en agitant. On met sous vide (-0,8 bar) et règle la consigne de chauffe à 100°C. Lorsque l'eau commence à distiller, et au fur et à mesure de la montée en température, on augmente progressivement la consigne de température jusqu'à 175°C.

Lorsque la température atteinte est de 175 °C, on poursuit le chauffage pendant encore 4 heures. La réaction est arrêtée, en coupant le vide et en arrêtant la chauffe, lorsque la teneur en méthoxypolyéthylèneglycol mesurée par chromatographie par exclusion stérique est inférieure à 2 %.

Le polymère ainsi obtenu présente un taux d'ester de 20. Il est anhydre et manipulable à une température de 50 °C. Il est de préférence utilisé sans autre purification.

Le tableau 1 ci-dessous résume les proportions de matières premières mises en oeuvre pour la préparation du produit A.

**Tableau 1**

| **Produit** | **PMA** [%] | **MPEG 2000** [%] | **NaOH** [%] | **Taux d'ester** |
|---|---|---|---|---|
| A | 42,82 | 56,78 | 0.40 | 20 |

### B. Formulation du polymère (formulation B)

Le polymère A obtenu comme indiqué ci-dessus est formulé à 30% d'extrait sec et en incorporant 0,23 % d'un antimousse 1 et 0,02 % d'un antimousse 2. Le pH est ajusté à pH 7 au moyen d'une base neutralisante (hydroxyde de sodium).

Le tableau 2 ci-dessous résume la formulation B.

**Tableau 2**

| **Formulation** | **Produit A** [%] | **antimousse 1** [%] | **antimousse 2** [%] | **NaOH** [%] | **Eau** |
|---|---|---|---|---|---|
| B | 30 | 0,23 | 0,02 | Jusqu'à pH 7 | QSP |

| | |
|---|---|
| PMA | : Acide polyméthacrylique, extrait sec de 30 %, Mw = 4000, Indice d'acidité = 180 mg KOH/g |
| MPEG 2000 | :Polyglycol M 2000 |

### EXEMPLE 1 (REFERENCE J)

### Préparation d'une suspension pigmentaire jaune

Dans un malaxeur Rayneri de type RW 20 n (distribué par IKA) muni d'une pâle défloculeuse de type d'un diamètre de 4 cm, on a préparé 400 g de suspension d'oxyde de fer comme suit.

On a introduit dans l'ordre 195,2g d'eau, 4,0g de formulation B obtenu comme indiqué ci-dessus, 200g de pigment jaune (Bayferrox 420 de chez Lanxess) et on maintient sous agitation pendant 10 minutes à une puissance de 2000 tr/min. On introduit ensuite 0,8g de xanthane comme agent stabilisant et on maintient encore sous agitation pendant 5 minutes à une puissance de 2000 tr/min.

### EXEMPLE 1 DE COMPARAISON (REFERENCE RJ)

### Préparation d'une suspension pigmentaire jaune

On répète l'exemple 1, sauf que l'on remplace la formulation B par 4,0g de Sokalan CP10 de chez BASF (solution d'acide polyacrylique).

### EXEMPLE 2 (REFERENCE N)

### Préparation d'une suspension pigmentaire noire

Dans un malaxeur Rayneri de type RW 20 n (distribué par IKA) muni d'une pâle défloculeuse d'un diamètre de 4 cm, on a préparé 400 g de suspension d'oxyde de fer comme suit.

On a introduit dans l'ordre 197,4g d'eau, 2,0g de la formulation B obtenu comme indiqué ci-dessus, 200g de pigment noir (Bayferrox 330 de chez Lanxess) et on maintient sous agitation pendant 10 minutes à une puissance de 2000 tr/min. On introduit ensuite 0,6g de xanthane comme agent stabilisant et on maintient encore sous agitation pendant 5 minutes à une puissance de 2000 tr/min.

### EXEMPLE 2 DE COMPARAISON (REFERENCE RN)

### Préparation d'une suspension pigmentaire noire

On répète l'exemple 2, sauf que l'on remplace la formulation B par 2,0g de Sokalan CP10 de chez BASF (solution d'acide polyacrylique).

### EXEMPLE 3 (REFERENCE R)

### Préparation d'une suspension pigmentaire rouge

Dans un malaxeur Rayneri de type RW 20 n (distribué par IKA) muni d'une pâle défloculeuse d'un diamètre de 4 cm, on a préparé 400 g de suspension d'oxyde de fer comme suit.

On a introduit dans l'ordre 157,8g d'eau, 1,6g de formulation B obtenu comme indiqué ci-dessus, 240g de pigment rouge (Bayferrox 110 de chez Lanxess) et on maintient sous agitation pendant 10 minutes à une puissance de 2000 tr/min. On introduit ensuite 0,6g de xanthane comme agent stabilisant et on maintient encore sous agitation pendant 5 min. à une puissance de 2000 tr/min.

### EXEMPLE 3 DE COMPARAISON (REFERENCE RR)

### Préparation d'une suspension pigmentaire rouge

On répète l'exemple 3, sauf que l'on remplace la formulation B par 1,6g de Sokalan CP10 de chez BASF (solution d'acide polyacrylique).

Les proportions relatives des composants des suspensions pigmentaires préparées selon les exemples ci-dessus sont résumées dans le tableau ci-dessous.

**Tableau 3 : Formulation des suspensions pigmentaires**

| **Reférence** | Eau [%] | Formulation B [%] | PAA [%] | Pigment 1 [%] | Pigment 2 [%] | Pigment 3 [%] | Xanthane [%] |
|---|---|---|---|---|---|---|---|
| **J** | 48,8 | 1,0 | 0 | 50 | 0 | 0 | 0,2 |
| **RJ** | 48,8 | 0 | 1,0 | 50 | 0 | 0 | 0,2 |
| **N** | 49,35 | 0,5 | 0 | 0 | 50 | 0 | 0,15 |
| **RN** | 49,35 | 0 | 0,5 | 0 | 50 | 0 | 0,15 |
| **R** | 39,45 | 0,4 | 0 | 0 | 0 | 60 | 0,15 |
| **RR** | 39,45 | 0 | 0,4 | 0 | 0 | 60 | 0,15 |

| | | | | | | | |
|---|---|---|---|---|---|---|---|
| PAA = Sokalan CP10 de chez BASF ou LOPON 890 de chez BK Giulini Pigment 1 = Bayferrox 420 Pigment 2 = Bayferrox 330 Pigment 3 = Bayferrox 110 | | | | | | | |

### EXEMPLE 4

### Evaluation de la coloration sur mortier

Afin d'évaluer la force de teinte des suspensions pigmentaires préparées, on a préparé des mortiers en incorporant les suspensions pigmentaires au niveau de l'étape de confection du mortier sec qui servira à fabriquer des blocs en mortier sec via l'utilisation d'une presse hydraulique.

On a donc confectionné tout d'abord un mortier sec selon la formule indiquée dans le tableau 4 ci-dessous comme suit.

Dans un bol inox de 3L d'un malaxeur (de type Power Mix distribué par Krups) équipé d'une pâle d'agitation de type fouet, on introduit 1250g de sable AFNOR et 350g de ciment (HTS Superblanc du Teil CP2 52,5 N) et on maintient sous agitation pendant 30 secondes à puissance 3. On introduction ensuite une quantité équivalente à 3 g de matière sèche de la suspension de référence J, RJ, N, RN, R ou RR et 102 g d'eau en 30 secondes et on maintient sous agitation pendant encore 4 minutes.

Le mortier présente un ratio E_{efficace}/L_{équivalent} de 0,29.

**Tableau 4 : Formulation du mortier**

| | |
|---|---|
| Ciment HTS Superblanc du Teil CP2 52,5 N | 350 g |
| Sable AFNOR | 1250 g |
| Suspension de formule J, RJ, N, RN, R ou RR | 3 g de matière sèche |
| Eau | 102 g |

A partir de ce mortier, on confectionne ensuite un bloc mortier comme suit. On introduit dans un moule de dimensions 7 x 12 x 3 cm 500 g de mortier coloré puis on presse dans une presse hydraulique à 130 bars pendant 10 secondes. On démoule le bloc et on le laisse sous atmosphère ambiante pendant une semaine.

La coloration du bloc de mortier ainsi obtenu est évaluée comme suit. 7 jours après la confection du mortier, les mesures colorimétriques sont réalisées à l'aide d'un colorimètre de type Minolta CR 310 en surface de la pièce mortier en trois endroits différents exempts d'efflorescence. La moyenne de ces trois mesures est portée dans le tableau 5 ci-dessous.

**Tableau 5 : Mesures colorimétriques**

| **Référence** | **L** | **a** | **B** | **C*=saturation** |
|---|---|---|---|---|
| N | 30,77 | 0,69 | 0,80 | 1,06 |
| RN | 32,09 | 0,70 | 0,81 | 1,07 |
| J | 52,80 | 3,17 | 29,11 | 29,28 |
| RJ | 53,87 | 2,89 | 27,51 | 27,66 |
| R | 39,07 | 18,17 | 15,73 | 24,04 |
| RR | 40,44 | 17,25 | 15,11 | 22,93 |

La comparaison des valeurs de colorimétrie relevées pour les blocs des exemples référencés N et RN, fait constater que les coefficients a et b sont quasi identiques tandis que la clarté (paramètre L) est plus faible pour le bloc coloré avec la formule N en comparaison à celui coloré avec la formule RN.

Ces résultats montrent que la nature du dispersant utilisé lors de la formulation d'une suspension pigmentaire est signifiante. Plus précisément, ces résultats mettent en évidence l'amélioration de la force colorante d'une suspension pigmentaire destinée à colorer un mortier sec, lorsque celui-ci est formulé avec un polycarboxylate de polyoxyde d'alkylène plutôt qu'avec un acide polyacrylique.

Le gain en force colorante est estimé à 4,0 %(L_{RN}-L_{N}/L_{RN}).

La comparaison des valeurs de colorimétrie relevées pour les blocs colorés avec la suspension J et RJ fait remarquer que le bloc coloré avec la formule J possède des valeurs de b et de saturation plus élevées que celles du bloc coloré avec la formule RJ.

Il est déduit que la couleur observée sur le bloc coloré avec la formule J est plus profonde que celle observée sur le bloc coloré avec la formule RJ.

Ce résultat montre l'intérêt de formuler une suspension pigmentaire avec polycarboxylate de polyoxyde d'alkylène plutôt qu'avec un acide polyacrylique, le gain estimé en force colorante est ainsi de 2,0 %(S_{RJ}-S_{J}/S_{RJ}).

La comparaison des valeurs de colorimétrie relevées pour les blocs colorés avec la suspension R et RR, fait remarquer une différence au niveau du coefficient a et à la valeur de la saturation L.

Ces valeurs sont ainsi plus élevées pour le bloc de mortier coloré avec la formule R que celles du bloc coloré avec la formule RR caractéristique d'une couleur plus profonde. Ce résultat met en évidence le gain de force colorante apporté par l'utilisation polycarboxylate de polyoxyde d'alkylène plutôt qu'avec un acide polyacrylique.

Pour cet essai, le gain en force colorante a été estimé à 4,81 % (S_{RN}-S_{R}/S_{RN}).

## Revendications

1. Suspension aqueuse pigmentaire comportant au moins un polycarboxylate de polyoxyde d'alkylène qui est un copolymère en peigne à chaîne principale polycarboxylate portant des chaînes latérales greffées de polyoxyde d'alkylène.

2. Suspension pigmentaire selon la revendication 1, dans laquelle le pigment est un oxyde ou un hydroxyde métallique.

3. Suspension pigmentaire selon la revendication 1 ou 2, dans laquelle le pigment est un oxyde de fer.

4. Suspension pigmentaire selon l'une des revendications 1 à 3, dans laquelle le polycarboxylate de polyoxyde d'alkylène est dérivé d'acide polyméthacrylique.

5. Suspension pigmentaire selon l'une des revendications 1 à 4, dans laquelle le polycarboxylate de polyoxyde d'alkylène comporte des unités dérivées de méthoxypolyéthylène glycol.

6. Suspension pigmentaire selon l'une des revendications 1 à 5, dans laquelle le polycarboxylate de polyoxyde d'alkylène comporte des unités dérivées de méthoxypolyéthylène glycol d'une masse molaire de 350 à 5000 D.

7. Suspension pigmentaire selon l'une des revendications 1 à 6, comprenant 0,05 à 25 % en poids de polycarboxylate de polyoxyde d'alkylène par rapport au poids de pigment.

8. Suspension pigmentaire selon l'une des revendications 1 à 7, comprenant de 40 à 70 % en poids de pigment.

9. Suspension pigmentaire selon l'une des revendications 1 à 8, comprenant en outre 0,01 à 10 % en poids d'au moins un agent anti-mousse.

10. Suspension pigmentaire selon l'une des revendications 1 à 9, comprenant en outre 0,01 à 10 % en poids d'au moins un agent de stabilisation.

11. Utilisation d'un polycarboxylate de polyoxyde d'alkylène qui est un copolymère en peigne à chaîne principale polycarboxylate portant des chaînes latérales greffées de polyoxyde d'alkylène pour améliorer la force de teinte d'une suspension pigmentaire.

12. Utilisation selon la revendication 11, dans laquelle la suspension pigmentaire est destinée à la coloration de matériaux à prise hydraulique.

13. Utilisation selon la revendication 12, dans laquelle la suspension pigmentaire est destinée à la coloration de ciments.

## Claims

1. Aqueous pigment suspension comprising at least one alkylene polyoxide polycarboxylate, which is a comb copolymer having a polycarboxylate main chain carrying side chains grafted with alkylene polyoxide.

2. Pigment suspension according to claim 1, in which the pigment is a metal oxide or hydroxide.

3. Pigment suspension according to claim 1 or 2, in which the pigment is an iron oxide.

4. Pigment suspension according to any of claims 1 to 3, in which the alkylene polyoxide polycarboxylate is derived from polymethacrylic acid.

5. Pigment suspension according to any of claims 1 to 4, in which the alkylene polyoxide polycarboxylate comprises units derived from methoxypolyethylene glycol.

6. Pigment suspension according to any of claims 1 to 5, in which the alkylene polyoxide polycarboxylate comprises units derived from methoxypolyethylene glycol having a molar mass of from 350 to 5000 D.

7. Pigment suspension according to any of claims 1 to 6, comprising from 0.05 to 25 % by weight of alkylene polyoxide polycarboxylate, based on the weight of pigment.

8. Pigment suspension according to any of claims 1 to 7, comprising from 40 to 70 % by weight pigment.

9. Pigment suspension according to any of claims 1 to 8, additionally comprising from 0.01 to 10 % by weight of at least one anti-foaming agent.

10. Pigment suspension according to any of claims 1 to 9, additionally comprising from 0.01 to 10 % by weight of at least one stabilizing agent.

11. Use of an alkylene polyoxide polycarboxylate, which is a comb copolymer having a polycarboxylate main chain carrying side chains grafted with alkylene polyoxide for improving the colour strength of a pigment suspension.

12. Use according to claim 11, in which the pigment suspension is intended for the colouring of hydraulic set materials.

13. Use according to claim 12, in which the pigment suspension is intended for the colouring of cements.

## Patentansprüche

1. Wäßrige Pigmentsuspension, umfassend mindestens ein Polycarboxylat eines Polyoxyalkylens, welches ein Kammcopolymer mit Polycarboxylathauptkette ist, welche aufgepfropfte Polyoxyalkylen-Seitenketten trägt.

2. Pigmentsuspension gemäß Anspruch 1, wobei das Pigment ein Oxid oder ein metallisches Hydroxid ist.

3. Pigmentsuspension gemäß Anspruch 1 oder 2, wobei das Pigment ein Eisenoxid ist.

4. Pigmentsuspension gemäß einem der Ansprüche 1 bis 3, wobei das Polycarboxylat eines Polyoxyalkylens von Polymethacrylsäure abgeleitet ist.

5. Pigmentsuspension gemäß einem der Ansprüche 1 bis 4, wobei das Polycarboxylat eines Polyoxyalkylens Einheiten umfasst, die von Methoxypolyethylenglykol abgeleitet sind.

6. Pigmentsuspension gemäß einem der Ansprüche 1 bis 5, wobei das Polycarboxylat eines Polyoxyalkylens Einheiten umfasst, die von Methoxypolyethylenglykol mit einer molaren Masse von 350 bis 5000 D abgeleitet sind.

7. Pigmentsuspension gemäß einem der Ansprüche 1 bis 6, enthaltend 0,05 bis 25 Gewichts-% Polycarboxylat eines Polyoxyalkylens bezogen auf das Pigmentgewicht.

8. Pigmentsuspension gemäß einem der Ansprüche 1 bis 7, enthaltend 40 bis 70 Gewichts-% des Pigments.

9. Pigmentsuspension gemäß einem der Ansprüche 1 bis 8, zusätzlich enthaltend 0,01 bis 10 Gewichts-% von mindestens einem Antischaummittel.

10. Pigmentsuspension gemäß einem der Ansprüche 1 bis 9, zusätzlich enthaltend 0,01 bis 10 Gewichts-% von mindestens einem Stabilisationsmittel.

11. Verwendung eines Polycarboxylats eines Polyoxyalkylens, das ein Kammcopolymer mit Polycarboxylathauptkette ist, welche aufgepfropfte Polyoxyalkylen-Seitenketten trägt, um die Farbtonstärke einer Pigmentsuspension zu verbessern.

12. Verwendung gemäß Anspruch 11, wobei die Pigmentsuspension zur Färbung eines hydraulischen Bindemittels bestimmt ist.

13. Verwendung gemäß Anspruch 12, wobei die Pigmentsuspension zur Färbung von Zement bestimmt ist.
